# EUROPÄISCHE PATENTSCHRIFT

(11) **EP 2 782 862 B1**
(45) Veröffentlichungstag und Bekanntmachung des Hinweises auf die Patenterteilung: **20.04.2016**
(21) Anmeldenummer: 12790541.2
(22) Anmeldetag: 20.11.2012
(51) Int. Cl.: B66C 13/12, F16G 13/16, F16L 3/00, H02G 11/00

(54) **VORRICHTUNG ZUM EINSATZ IN EINER WERKZEUGMASCHINE SOWIE WERKZEUGMASCHINE**
DEVICE FOR INSERTING IN A MACHINE TOOL, AND MACHINE TOOL
DISPOSITIF À EMPLOYER DANS UNE MACHINE-OUTIL ET MACHINE-OUTIL

(30) Priorität: 21.11.2011 DE 202011108153 U
(43) Veröffentlichungstag der Anmeldung: 01.10.2014
(73) Patentinhaber: DECKEL MAHO Pfronten GmbH, 87459 Pfronten (DE)
(72) Erfinder: JUNG, Robert, 87459 Pfronten (DE)
(74) Vertreter: MERH-IP Matias Erny Reichl Hoffmann Patentanwälte PartG mbB
(86) Internationale Anmeldenummer: PCT/EP2012/073134
(87) Internationale Veröffentlichungsnummer: WO 2013/076097

(56) Entgegenhaltungen:
- EP-A1- 0 664 176
- DE-B1- 2 727 434
- JP-A- 61 121 846

## Beschreibung

Die Erfindung betrifft eine Vorrichtung zum Einsatz in einer Werkzeugmaschine sowie eine Werkzeugmaschine.

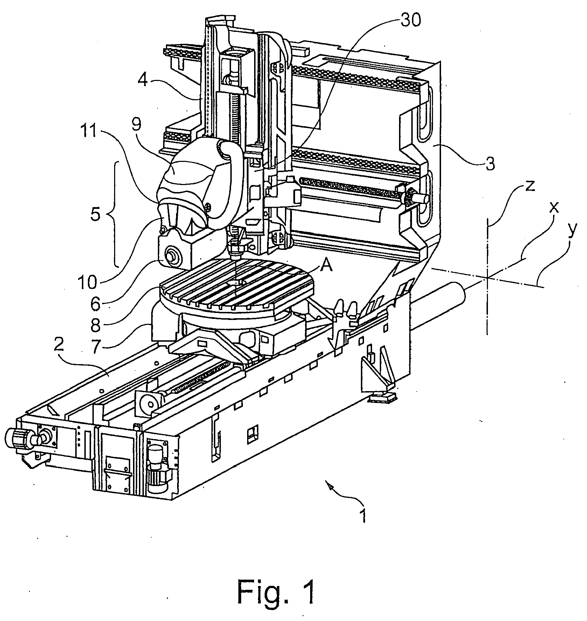

Werkzeugmaschinen sind bedeutende Produktionsmittel in der verarbeitenden Industrie. Figur 1 zeigt ein Beispiel einer Werkzeugmaschine 1, die folgende Komponenten aufweist: eine erste Führungsstruktur 2, eine zweite Führungsstruktur 3, eine dritte Führungsstruktur 4, eine Vorrichtung 5, einen Schlitten 7 sowie einen Drehtisch 8. Der Schlitten 7 ist entlang der ersten Führungsstruktur 2 in X-Richtung führbar. Der Drehtisch 8 ist auf dem Schlitten 7 angeordnet und relativ gegenüber dem Schlitten 7 um eine Achse A verdrehbar. Die zweite Führungsstruktur 3 ist mit der ersten Führungsstruktur 2 starr verbunden und ermöglicht die Führung der dritten Führungsstruktur 4 in Y-Richtung. Die Vorrichtung 5 ist entlang der dritten Führungsstruktur 4 in Z-Richtung führbar. Die Vorrichtung 5 weist eine erste Einheit 9, eine mit der ersten Einheit 9 verbundene zweite Einheit 10 sowie eine mit der zweiten Einheit 10 verbundene Motorspindel 6 auf, wobei die zweite Einheit 10 um eine Drehachse D (in einer Schnittebene 11) relativ zu der ersten Einheit 9 verdrehbar ist. Die Motorspindel 6 ist mit der zweiten Einheit 10 starr verbunden. Die Vorrichtung 5 weist weiterhin einen Schlauch 12 auf, der aus einem elastischen Material gefertigt ist und sich außerhalb der ersten Einheit 9 und der zweiten Einheit 10 von einer Öffnung 13 in der ersten Einheit 9 zu einer Öffnung 14 in der Motorspindel 6 erstreckt. Der Schlauch 12 dient zur Aufnahme von unterschiedlichen Leitungen, die elektrische Signale, Fluide, Antriebsströme und dergleichen für die Motorspindel 6 bereitstellen.

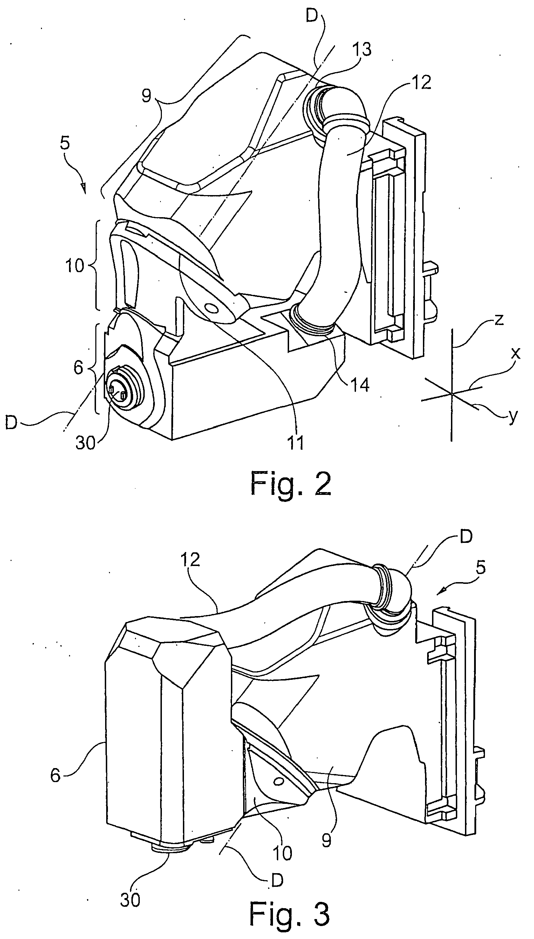

Nachteilig an dem Aufbau der Vorrichtung 5 ist, dass durch das Vorsehen des Schlauchs 12 die Rotationsfreiheit der zweiten Einheit 10 und damit der Motorspindel 6 gegenüber der ersten Einheit 9 eingeschränkt ist. Dies ist in den Figuren 2 und 3 veranschaulicht: Figur 2 zeigt einen Zustand der Vorrichtung 5, bei dem eine Öffnung 30 der Motorspindel 6 zur Aufnahme eines Spindelwerkzeuges parallel zur X-Richtung ausgerichtet ist. Figur 3 zeigt einen Zustand der Vorrichtung 5, bei dem die Öffnung 30 der Motorspindel 6 parallel zur Z-Richtung ausgerichtet ist. Wie aus Figur 3 ersichtlich ist, ist ein weiteres Verdrehen der zweiten Einheit 10 gegenüber der ersten Einheit 9 entgegen dem Uhrzeigersinn nicht möglich, da in diesem Fall der Schlauch 12 einen gespannten Zustand annehmen würde, was ein Weiterdrehen verhindert.

Dokument EP 0664176 A1 offenbart eine Vorrichtung zum Einsatz in einer Werkzeugmaschine, mit einer ersten Einheit, einer mit der ersten Einheit verbundenen zweiten Einheit, wobei die erste Einheit um eine Drehachse relativ zu der zweiten Einheit verdrehbar ist, und einer mit der zweiten Einheit verbundenen Motorspindel. Dokument DE 2727434 B1 offenbart eine Schwenkkupplung für unter sehr hohem Druck stehende Fluide, die zur Gewinnung harter mineralischer Rohstoffe eingesetzt wird.

Die der Erfindung zugrunde liegende Aufgabe ist daher, eine Vorrichtung anzugeben, mit der die vorangehend beschriebene Problematik vermieden werden kann.

Zur Lösung dieser Aufgabe stellt die Erfindung eine Vorrichtung gemäß Anspruch 1 sowie eine Werkzeugmaschine gemäß Anspruch 10 bereit. Vorteilhafte Ausgestaltungen bzw. Weiterbildungen des Erfindungsgedankens finden sich in den Unteransprüchen.

Gemäß einer Ausführungsform der Erfindung wird eine Vorrichtung zum Einsatz in einer Werkzeugmaschine bereitgestellt, mit: einer ersten Einheit; einer mit der ersten Einheit verbundenen zweiten Einheit, wobei die erste Einheit um eine Drehachse relativ zu der zweiten Einheit verdrehbar ist; einer mit der zweiten Einheit verbundenen Motorspindel; einer Leitungsdurchführung, die sich entlang der Drehachse aus der ersten Einheit in die zweite Einheit hinein erstreckt; Leitungen, die aus dem Inneren der ersten Einheit durch die Leitungsdurchführung sowie durch die zweite Einheit hindurch in die Motorspindel verlaufen; und einer Leitungs-Führungseinrichtung, die in der ersten Einheit ausgebildet ist und die zur Führung eines Teils der Leitungen, der in der ersten Einheit unmittelbar vor der Leitungsdurchführung angeordnet ist, dient. Die Leitungs-Führungseinrichtung ist in einer Ebene (bzw. "Schicht") ausgebildet, die senkrecht zur Drehachse ausgerichtet ist. Die Leitungs-Führungseinrichtung führt die Leitungen bei Drehung der zweiten Einheit gegenüber der ersten Einheit innerhalb der Ebene/Schicht so nach, dass ein durch die Drehung bewirktes Verdrillen der Leitungen im Bereich der Leitungsdurchführung reduziert bzw. vermieden wird.

Gemäß einer Ausführungsform der Erfindung ist die Leitungs-Führungseinrichtung durch Drehung der zweiten Einheit gegenüber der ersten Einheit zwischen einem ersten Zustand, in dem die Leitungs-Führungseinrichtung ein bogenförmiges Segment ausbildet, und einem zweiten Zustand, in dem die Leitungs-Führungseinrichtung eine Spirale ausbildet, hin- und herführbar.

Gemäß einer Ausführungsform der Erfindung weist die Leitungs-Führungseinrichtung eine Verkettung aus relativ zueinander verdrehbaren Führungselementen auf.

Gemäß einer Ausführungsform der Erfindung ist ein erster Bereich der Leitungen, der sich an einem der zweiten Einheit zugewandten Ende der Leitungsdurchführung oder in der zweiten Einheit befindet, mit der zweiten Einheit fest verbunden, derart, dass sich ein erster Drehwinkel β des ersten Bereichs der Leitungen bezüglich der Drehachse D einem Drehwinkel bezüglich der Drehachse D entspricht, um den die zweite Einheit gegenüber der ersten Einheit gedreht wird, wobei sich die Leitungen innerhalb der Leitungsdurchführung gegenüber der ersten Einheit frei bewegen können.

Gemäß einer Ausführungsform der Erfindung ist mittels der Leitungs-Führungseinrichtung ein zweiter Bereich der Leitungen, der sich an einem der ersten Einheit zugewandten Ende der Leitungsdurchführung oder in der ersten Einheit befindet, bezüglich der Drehachse D unabhängig vom ersten Drehwinkel β um einen zweiten Drehwinkel α drehbar, derart, dass eine Differenz zwischen dem ersten Drehwinkel β und dem zweiten Drehwinkel α dem Ausmaß der Verdrillung der Leitungen 16 innerhalb der Leitungsdurchführung 15 entspricht. "Unabhängig" bedeutet in diesem Zusammenhang, dass die Leitungs-Führungseinrichtung so ausgestaltet sein kann, dass eine Verdrehung der zweiten Einheit gegenüber der ersten Einheit nicht zwingend ein automatisches Nachführen der Leitungen durch die Leitungs-Führungseinrichtung und damit ein Verdrehen des zweiten Bereichs der Leitungen bewirkt. Beispielsweise kann die Nachführung bei Bedarf selektiv aktiviert werden, wenn große Verdrillungen zu erwarten sind. Die Nachführung kann beispielsweise so erfolgen, dass der erste Drehwinkel β dem zweiten Drehwinkel α entspricht. Alternativ kann die Nachführung so erfolgen, dass der erste Drehwinkel β größer als der zweite Drehwinkel α ist, wenn die damit in Kauf genommene Verdrillung noch tolerierbar ist.

Gemäß einer Ausführungsform der Erfindung sind die Leitungen mittels der Leitungs-Führungseinrichtung so nachführbar, dass ein Drehwinkel der Leitungen an einem der ersten Einheit zugewandten Ende der Leitungsdurchführung einem Drehwinkel der Leitungen innerhalb der zweiten Einheit entspricht. Da die beiden Effekte sich "aufheben", kann ein (relatives) Verdrillen der Leitungen vermieden werden.

Gemäß einer Ausführungsform der Erfindung weist die Leitungsdurchführung an dem der ersten Einheit zugewandten Ende ein entlang der Drehachse verlaufendes erstes rohrförmiges Element auf, an dessen der zweiten Einheit abgewandten Ende ein zweites rohrförmiges Element schwenkbar gelagert ist, wobei die Ausrichtung des zweiten rohrförmigen Elements wenigstens eine Komponente aufweist, die senkrecht zur Drehachse verläuft, wobei das zweite rohrförmige Element bezüglich einer Ebene schwenkbar gelagert ist, die senkrecht zur Drehachse und durch das der ersten Einheit zugewandte Ende der Leitungsdurchführung verläuft, und wobei die Leitungen durch das erste rohrförmige Element und das zweite rohrförmige Element hindurch verlaufen.

Gemäß einer Ausführungsform der Erfindung stehen das erste rohrförmige Element, das zweite rohrförmige Element sowie die Leitungs-Führungseinrichtung so miteinander in Wirkverbindung, dass das zweite rohrförmige Element bei Drehung der zweiten Einheit gegenüber der ersten Einheit um einen Winkel α ebenfalls um den Winkel α gedreht wird. Damit kann ein Verdrillen der Leitungen innerhalb des ersten und des zweiten rohrförmigen Elements (insbesondere an deren Schnittstelle) vermieden werden.

Gemäß einer Ausführungsform der Erfindung weisen die Leitungen wenigstens eine der folgender Leitungen auf: eine Leitung zum Zuführen von Schmierung für die Lager der Motorspindel, eine Leitung zum Leiten eines Temperatursignals von Temperatursensoren der Motorspindel, eine Leitung zum Leiten von Sperrluft, eine Leitung zum Leiten von Blasluft, eine Leitung zum Leiten von Kühlschmierstoff, eine Leitung zum Leiten von Kühlwasser für die Motorspindel, eine Leitung zum Leiten von einem Hydraulikfluid für eine Spannvorrichtung, eine Leitung zum Leiten von elektrischem Strom für eine Arbeitsraumleuchte, eine Leitung zum Leiten eins Vibrationssignals von Vibrationssensoren der Motorspindel, eine Leitung zum Leiten eines Drehgebersignals eines Drehgebers der Motorspindel, eine Leitung zum Leiten von elektrischem Strom für einen Antrieb der Motorspindel, und eine Erdungsleitung für die Motorspindel.

Die Vorrichtung gemäß einer der vorgenannten Ausführungsformen kann in einer Werkzeugmaschine eingesetzt werden. Insbesondere kann die Vorrichtung auf einem Schlitten der Werkzeugmaschine montiert sein, der entlang einer Führungsschiene bewegbar ist.

Die Erfindung wird im Folgenden unter Bezugnahme auf die Figuren in beispielsweiser Ausführungsform näher erläutert. Es zeigen:
- **Figur 1**: ein Beispiel einer herkömmlichen Werkzeugmaschine;
- **Figur 2**: eine in Figur 1 gezeigte Vorrichtung in einem ersten Drehzustand;
- **Figur 3**: eine in Figur 1 gezeigte Vorrichtung in einem zweiten Drehzustand;
- **Figur 4**: ein Teil einer Vorrichtung gemäß einer Ausführungsform der Erfindung in einem ersten Zustand;
- **Figur 5**: ein Teil einer Vorrichtung gemäß einer Ausführungsform der Erfindung in einem zweiten Zustand;
- **Figur 6**: ein Teil einer Vorrichtung gemäß einer Ausführungsform der Erfindung in einem ersten Zustand;
- **Figur 7**: ein Teil einer Vorrichtung gemäß einer Ausführungsform der Erfindung in einem zweiten Zustand;
- **Figur 8**: ein Teil einer Vorrichtung gemäß einer Ausführungsform der Erfindung; und
- **Figur 9**: ein Teil einer Vorrichtung gemäß einer Ausführungsform der Erfindung.

In den Figuren sind identische bzw. einander entsprechende Bereiche, Bauteile oder Bauteilgruppen mit denselben Bezugsziffern gekennzeichnet. Des Weiteren ist zu erwähnen, dass die Zeichnungen schematischer Natur sind, das heißt nicht maßstabsgetreu zu sein brauchen.

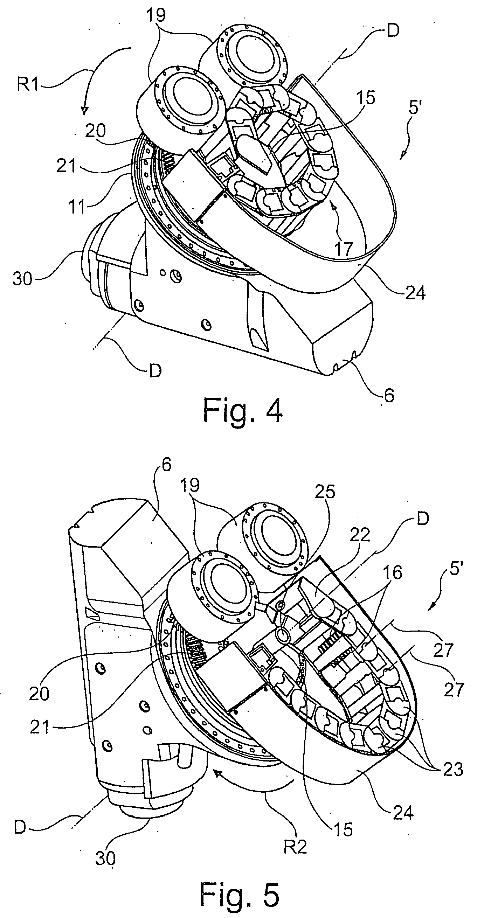

Figur 4 zeigt eine Vorrichtung 5' zum Einsatz in einer Werkzeugmaschine gemäß einer Ausführungsform der Erfindung. Die Vorrichtung 5' entspricht in ihrem äußeren Aufbau der in den Figuren 1 bis 3 gezeigten Vorrichtung 5. Jedoch besteht ein wesentlicher Unterschied darin, dass in der Vorrichtung 5' kein Schlauch 12 außerhalb der ersten Einheit 9, der zweiten Einheit 10 sowie der Motorspindel 6 vorgesehen ist. Stattdessen verlaufen entsprechende Leitungen zu der Motorspindel 6 durch das Innere der ersten Einheit 9 sowie der zweiten Einheit 10 hindurch.

Die Vorrichtung 5' weist auf: eine erste Einheit 9; eine mit der ersten Einheit 9 verbundene zweite Einheit 10, wobei die erste Einheit 9 um eine Drehachse D relativ zu der zweiten Einheit 10 verdrehbar ist; eine mit der zweiten Einheit 10 starr verbundene Motorspindel 6; eine Leitungsdurchführung 15, die sich entlang der Drehachse D aus der ersten Einheit 9 in die zweite Einheit 10 hinein streckt; Leitungen 16, die aus dem Inneren der ersten Einheit 9 durch die Leitungsdurchführung 16 sowie durch die zweite Einheit 10 hindurch in die Motorspindel 6 verlaufen; und eine Leitungs-Führungseinrichtung 17 (auch als Kabelschleppe oder Energieführungskette bezeichnet), die in der ersten Einheit 9 ausgebildet ist und die zur Führung eines Teils der Leitungen 16, der in der ersten Einheit 9 unmittelbar vor der Leitungsdurchführung 15 angeordnet ist, dient. Der in Figuren 4 und 5 zu sehende Teil der Leitungsdurchführung 15 (d.h. das der ersten Einheit 9 zugewandte Ende der Leitungsdurchführung 15) ist als rohrförmiges Element ausgebildet, das in die erste Einheit 9 hineinragt. Der in die erste Einheit 9 hineinragende Teil der Leitungsdurchführung 15 könnte auch weggelassen werden. Die Leitungs-Führungseinrichtung 17 ist in einer Ebene bzw. "Schicht" ausgebildet, die senkrecht zur Drehachse D ausgerichtet ist, wobei die Leitungs-Führungseinrichtung 17 die Leitungen 16 bei Drehung der zweiten Einheit 10 gegenüber der ersten Einheit 9 so nachführt, dass ein durch die Drehung normalerweise bewirktes Verdrillen der Leitungen 16 im Bereich der Leitungsdurchführung 15 vermieden oder reduziert wird.

Mit anderen Worten: Dreht sich die Motorspindel 6 durch gegenseitiges Verdrehen der ersten Einheit 9 und der zweiten Einheit 10 in eine Richtung, die durch Pfeil R1 angedeutet ist, um in den in Figur 4 gezeigten Drehzustand zu kommen, so dreht sich die Leitungs-Führungseinrichtung 17 ebenfalls in der durch den Pfeil R1 angedeuteten Richtung so, dass die Leitungs-Führungseinrichtung 17 eine spiralenförmige Form annimmt. Wird die Motorspindel 6 jedoch durch gegenseitiges Verdrehen der ersten Einheit 9 und der zweiten Einheit 10 in eine Richtung gedreht, die durch Pfeil R2 angedeutet ist (entgegengesetzt zur Drehrichtung R1), so wird die Leitungs-Führungseinrichtung 17 aus der spiralenförmigen Form übergeführt in eine Form, die einem bogenförmigen Segment entspricht, wie in Figur 5 gezeigt ist. Das gegenseitige Verdrehen der ersten Einheit 9 mit der zweiten Einheit 10 erfolgt über Elektromotoren 19, die über Ritzel 20 mit einem Zahnkranz 21 in Wirkverbindung stehen, der wiederum mit der zweiten Einheit 10 verbunden ist. Durch Drehen der Leitungs-Führungseinrichtung 17 mit der Drehrichtung R1 oder R2, d.h. durch das Mitdrehen des Endes 22 der Leitungs-Führungseinrichtung 17 bei der Drehung, wird bewirkt, dass der innerhalb des Endes 22 befindliche Teil der Leitungen 16 und damit der gesamte innerhalb der Leitungs-Führungseinrichtung 17 befindliche Teil der Leitungen 16 der Drehung nachgeführt wird. Da die Leitungen 16 von dem Ende 22 der Leitungs-Führungseinrichtung 17 heraus in die Leitungsdurchführung 15 hinein verlaufen, wird durch die Nachführung insbesondere bewirkt, dass sich die Leitungen 16 im Bereich zwischen dem Ende 22 der Leitungs-Führungseinrichtung 17 und einem Eingang 25 der Leitungsdurchführung 15 nicht verdrillen.

In dieser Ausführungsform weist die Leitungs-Führungseinrichtung 17 eine Verkettung aus relativ zu einander verdrehbaren Führungselementen 23 auf. Die Führungselemente 23 können sich gegeneinander um Achsen 27 verdrehen, die parallel zur Drehachse D ausgerichtet sind. Die Verkettung der Führungselemente 23 bildet auf diese Weise insgesamt eine Art Käfig aus, in dem die Leitungen 16 vorgesehen sind.

Das Ausmaß der Nachführung der Leitungen 16 kann unterschiedlich ausfallen: So kann die Nachführung der Leitungen 16 so erfolgen, dass eine Verdrillung der Leitungen 16 in einem Bereich zwischen dem Ende 22 der Leitungs-Führungseinrichtung 17 und einem Eingang 25 der Leitungsdurchführung 15 zu einem gewissen Ausmaß in Kauf genommen wird; in diesem Fall kann die Nachführung etwas geringer ausfallen als die Verdrehung der zweiten Einheit 10 gegenüber der ersten Einheit 9. Soll eine Verdrillung der Leitungen 16 vollständig vermieden werden, so sollte die Nachführung der Leitungs-Führungseinrichtung 17 der Verdrehung der zweiten Einheit 10 gegenüber der ersten Einheit 9 entsprechen.

Um zu verhindern, dass sich die Leitungs-Führungseinrichtung 17 bei Verdrehung der zweiten Einheit 10 gegenüber der ersten Einheit 9 unkontrolliert innerhalb der ersten Einrichtung 9 bewegt, ist in dieser Ausführungsform ein Riemen 24 vorgesehen, der eine bogenförmige Gestalt aufweist, an dessen Innenseite sich die Leitungs-Führungseinrichtung 17 im entrollten Zustand (das heißt im bogenförmigen Zustand) anschmiegt.

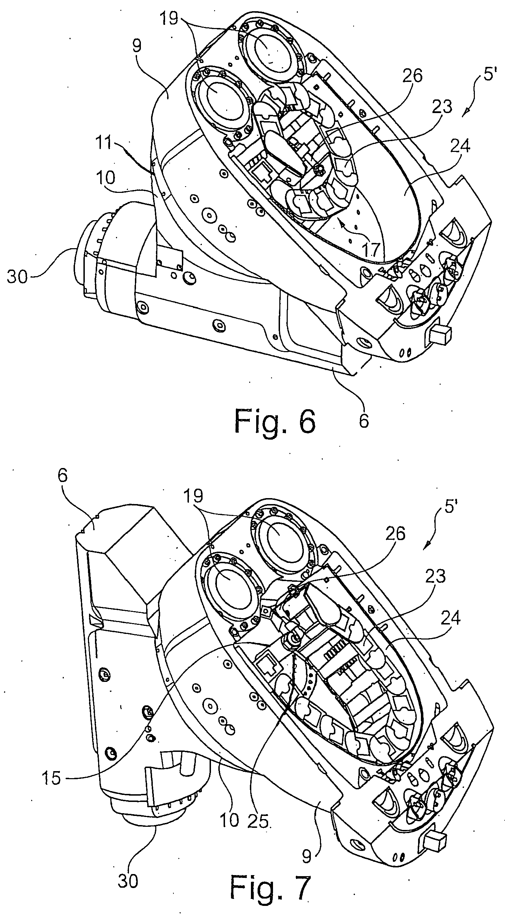

Figuren 6 und 7 zeigen eine Ausführungsform, die der in den Figuren 4 und 5 gezeigten Ausführungsform entspricht (zusätzlich ist ein Teil einer Außenwand der ersten Einheit 9 zu sehen, der in Figuren 4 und 5 weggelassen ist). Außerdem ist in den Figuren 6 und 7 gezeigt, dass auf dem Eingang 25 der Leitungsdurchführung 15 ein rohrförmiges Element 26 schwenkbar gelagert ist (schwenkbar in einer Ebene, die senkrecht zur Drehachse D und durch den Eingang 25 verläuft). Das rohrförmige Element 26 könnte jedoch auch gegenüber dieser Ebene um einen bestimmten Winkel geneigt sein. Die Leitungen 16 verlaufen von dem Ende 22 der Leitungs-Führungseinrichtung 17 durch das rohrförmige Element 26 hinein in die Leitungsdurchführung 15. Bei Verdrehung der zweiten Einrichtung 10 gegenüber der ersten Einrichtung 9 wird die Leitungs-Führungseinrichtung 17 zusammen mit dem rohrförmigen Element 26 nachgeführt, wodurch eine Verdrillung der Leitungen 16 vermieden werden kann. Eine Verdrillung kann beispielsweise vollständig vermieden werden, wenn der Drehwinkel des rohrförmigen Elements 26 dem Drehwinkel entspricht, mit dem die zweite Einheit 10 gegenüber der ersten Einheit 9 verdreht wird. Das Vermeiden bzw. das Reduzieren der Verdrillung ermöglicht es, die zweite Einheit 10 gegenüber der ersten Einheit 9 weiter zu verdrehen, als dies in der in Figuren 2 und 3 gezeigten Ausführungsform möglich ist, da weder eine Verdrillung der Leitungen 16 noch ein äußerer Schlauch 12 eine Kraft erzeugen kann, die ein Verdrehen der zweiten Einheit 10 gegenüber der ersten Einheit 9 verhindern kann.

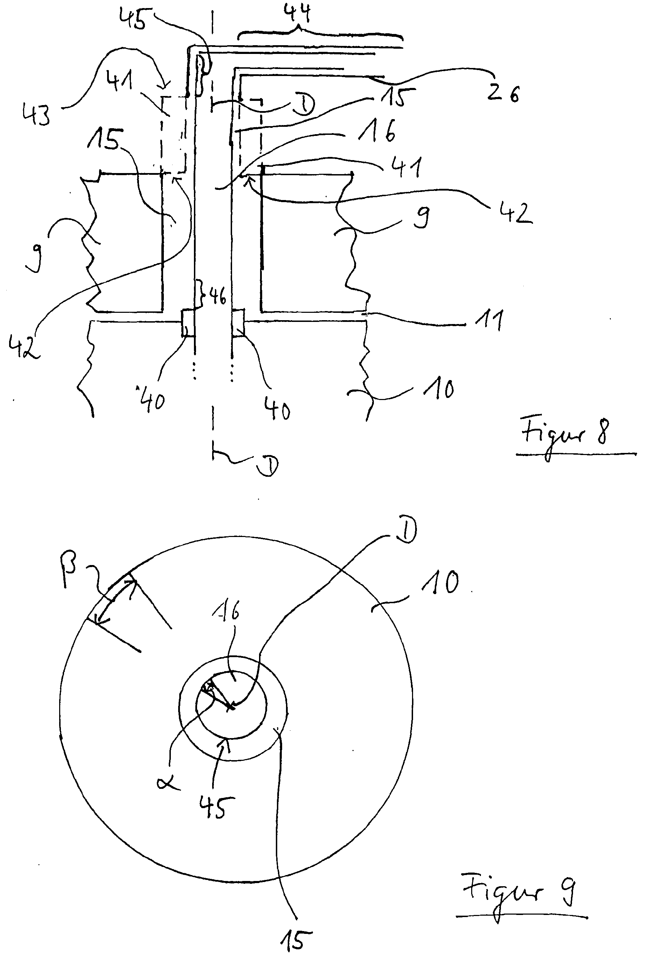

In Figur 8 ist eine schematische Querschnittsdarstellung des Verlaufs der Leitungen 16 zwischen der ersten Einheit 9 und der zweiten Einheit 10 gemäß einer Ausführungsform der Erfindung gezeigt. Die zweite Einheit 10 ist gegenüber der ersten Einheit 9 entlang der Schnittebene 11 verdrehbar. Die Leitungen 16 sind mit der zweiten Einheit 10 über eine Befestigungsvorrichtung 40 fest verbunden. Die Befestigungsvorrichtung 40 muss nicht zwingenderweise, wie in Figur 8 gezeigt, an einer Schnittstelle zwischen der ersten Einheit 9 und der zweiten Einheit 10 angeordnet sein, sondern kann auch an einer anderen geeigneten Stelle innerhalb der zweiten Einheit 10 vorgesehen sein. Die Befestigungsvorrichtung kann beispielsweise ein Halteelement aufweisen, das die Leitungen 16 umgibt, und das mittels Schrauben oder anderweitig an der zweiten Einheit 10 fixiert ist. Wie Figur 8 zu entnehmen ist, sind die Leitungen 16 innerhalb der Leitungsdurchführung 15 mit der ersten Einheit 9 nicht verbunden, d.h. gegenüber der ersten Einheit 9 frei bewegbar.

Wenn sich die zweite Einheit 10 gegenüber der ersten Einheit 9 entlang der Schnittebene 11 verdreht, drehen sich die Leitungen 16 mit der zweiten Einheit aufgrund ihrer Befestigung an der zweiten Einheit 10 mit. Dadurch verdrehen sich auch die Leitungen 16 innerhalb der Durchführung 15 relativ zur ersten Einheit 9. Um ein Verdrillen der Leitungen 16 innerhalb der Durchführung 15 durch diese Drehung zu verhindern, wird erfindungsgemäß ein oberer Bereich 45 der Leitungen 16 (der oberhalb der Durchführung 15 liegt) der Drehung der zweiten Einheit 10 zumindest teilweise nachgeführt. Das Nachführen der Leitungen 16 kann beispielsweise dadurch erfolgen, indem, wie in Figuren 6 und 7 gezeigt, das zweite rohrförmige Element 26 (in dem die Leitungen 16 verlaufen) gegenüber der ersten Einheit 9 (parallel zur Schnittebene 11) verschwenkt wird. Entspricht in diesem Beispiel der Drehwinkel des zweiten rohrförmigen Elements 26 (der Winkel, um den das zweite rohrförmige Element 26 in der Schnittebene 11 verschwenkt wird) dem Drehwinkel, um den die zweite Einheit 10 gegenüber der ersten Einheit 9 entlang der Schnittebene 11 verdreht wird, so tritt innerhalb der Durchführung 15 keine Verdrillung der Leitungen 16 auf. Ist hingegen der Drehwinkel des zweiten rohrförmigen Elements 26 kleiner als der Drehwinkel, um den die zweite Einheit 10 gegenüber der ersten Einheit 9 entlang der Schnittebene 11 verdreht wird, so tritt innerhalb der Durchführung 15 eine verminderte Verdrillung der Leitungen 16 auf (vermindert verglichen zu dem Fall, in dem gar keine Nachführung der Leitungen 16 erfolgen würde). Die Nachführung der Leitungen 16 kann auch mittels einer anderen Einrichtung erfolgen, d.h. das zweite rohrförmige Element 26 als Nachführelement ist lediglich beispielhaft. Gegebenenfalls kann das zweite rohrförmige Element 26 auch weggelassen werden, und lediglich die Leitungs-Führungseinrichtung 17 (Kette) zum Führen der Leitungen verwendet werden.

Die Durchführung 15 kann an ihrem der ersten Einheit 9 zugewandten Ende ein erstes rohrförmiges Element 41 aufweisen (durch Strichlinien schematisch angedeutet), dessen unteres Ende 42 mit der ersten Einheit 9 fest verbunden ist, und auf dessen oberem Ende 43 das zweite rohrförmige Element 26 schwenkbar gelagert ist. Das zweite rohrförmige Element 26 ist hierbei so gelagert, dass ein zur Drehachse D senkrecht verlaufender Teil 44 des zweiten rohrförmigen Elements 26 in einer Ebene verschwenkt wird, die senkrecht zur Drehachse D verläuft. Das erste rohrförmige Element 41 kann gegebenenfalls weggelassen werden.

In Figur 9 ist eine Draufsicht auf Teile der in Figur 8 gezeigten Ausführungsform dargestellt. In Figur 9 ist der Fall gezeigt, in dem bei einer Verdrehung der zweiten Einheit 10 gegenüber der ersten Einheit 9 um einen Winkel β bezüglich der Drehachse D die Leitungen 16 mittels des zweiten rohrförmigen Elements 26 so nachgeführt werden, dass sie sich im oberen Bereich 45 um einen Winkel α bezüglich der Drehachse D drehen. Ein unterer Bereich 46 der Leitungen nahe der Befestigungsvorrichtung 40 dreht sich hingegen um den Winkel β bezüglich der Drehachse D, da dieser Teil fest mit der zweiten Einheit 10 verbunden ist. Entspricht der Winkel α dem Winkel β, so entstehen innerhalb der Durchführung 15 keine Verdrillung der Leitungen 16. Ist der α < β, so tritt eine leichte Verdrillung auf. Ist α << β oder ist α =0, so tritt eine starke Verdrillung auf. Das Ausmaß der Nachführung der Leitungen 16 bestimmt somit das Ausmaß der Verdrillung innerhalb der Leitungsdurchführung 15.

Die durch die Leitungs-Führungseinrichtung 17 geführten Leitungen 16 können beispielsweise folgende Leitungen aufweisen: eine Leitung zum Zuführen von Schmierung für die Lager der Motorspindel 6, eine Leitung zum Leiten eines Temperatursignals von Temperatursensoren der Motorspindel 6, eine Leitung zum Leiten von Sperrluft, eine Leitung zum Leiten von Blasluft, eine Leitung zum Leiten von Kühlschmierstoff, eine Leitung zum Leiten von Kühlwasser für die Motorspindel 6, eine Leitung zum Leiten eines Hydraulikfluids (beispielsweise für eine Spannvorrichtung in der Motorspindel 6), eine Leitung zum Leiten von elektrischem Strom für eine Arbeitsraumleuchte, eine Leitung zum Leiten eines Vibrationssignals von Vibrationssensoren der Motorspindel 6, eine Leitung zum Leiten eines Drehgebersignals eines Drehgebers der Motorspindel 6, eine Leitung zum Leiten von elektrischem Strom für einen Antrieb der Motorspindel 6 und eine Erdungsleitung für die Motorspindel 6. Leitungen für andere Zwecke können ebenfalls eingesetzt werden.

Die in den Figuren 4 bis 7 gezeigten Ausführungsformen der Vorrichtung 5' können in beliebigen Werkzeugmaschinen eingesetzt werden. Beispielseise kann die Vorrichtung 5' in der in Figur 1 gezeigten Werkzeugmaschine 1 anstelle der Vorrichtung 5 verwendet werden. D.h., die Vorrichtung 5' wäre mittels des Schlittens 30 entlang der dritten Führungsstruktur 4 in Y-Richtung bewegbar.

## Patentansprüche

1. Vorrichtung (5') zum Einsatz in einer Werkzeugmaschine (1), mit:
- einer ersten Einheit (9),
- einer mit der ersten Einheit (9) verbundenen zweiten Einheit (10), wobei die erste Einheit (9) um eine Drehachse (D) relativ zu der zweiten Einheit (10) verdrehbar ist,
- einer mit der zweiten Einheit (10) verbundenen Motorspindel (6), **gekennzeichnet durch**
- eine Leitungsdurchführung (15), die sich entlang der Drehachse (D) aus der ersten Einheit (9) in die zweite Einheit (10) hinein erstreckt,
- Leitungen (16), die aus dem Inneren der ersten Einheit (9) **durch** die Leitungsdurchführung (15) sowie **durch** die zweite Einheit (10) hindurch in die Motorspindel (6) verlaufen, und
- eine Leitungs-Führungseinrichtung (17), die in der ersten Einheit (9) ausgebildet ist und die zur Führung eines Teils der Leitungen (16), der in der ersten Einheit (9) unmittelbar vor der Leitungsdurchführung (15) angeordnet ist, dient, wobei die Leitungs-Führungseinrichtung (17) in einer Ebene ausgebildet ist, die senkrecht zur Drehachse (D) ausgerichtet ist, und wobei die Leitungs-Führungseinrichtung (17) die Leitungen (16) bei Drehung der zweiten Einheit (10) gegenüber der ersten Einheit (9) so nachführt, dass ein **durch** die Drehung bewirktes Verdrillen der Leitungen (16) im Bereich der Leitungsdurchführung (15) vermieden oder reduziert wird.

2. Vorrichtung (5') nach Anspruch 1,
wobei die Leitungs-Führungseinrichtung (17) bei Drehung der zweiten Einheit (10) gegenüber der ersten Einheit (9) zwischen einem ersten Zustand, in dem die Leitungs-Führungseinrichtung (17) ein bogenförmiges Segment ausbildet, und einem zweiten Zustand, in dem die Leitungs-Führungseinrichtung (17) eine Spirale ausbildet, hin- und herführbar ist.

3. Vorrichtung (5') nach einem der Ansprüche 1 bis 2,
wobei die Leitungs-Führungseinrichtung (17) eine Verkettung aus relativ zueinander verdrehbaren Führungselementen (23) aufweist.

4. Vorrichtung (5') nach einem der Ansprüche 1 bis 3,
wobei ein erster Bereich (46) der Leitungen (16), der sich an einem der zweiten Einheit (10) zugewandten Ende der Leitungsdurchführung (15) oder in der zweiten Einheit (10) befindet, mit der zweiten Einheit (10) fest verbunden ist, derart, dass sich ein erster Drehwinkel (β) des ersten Bereichs (46) der Leitungen (16) bezüglich der Drehachse (D) einem Drehwinkel (β) bezüglich der Drehachse (D) entspricht, um den die zweite Einheit (10) gegenüber der ersten Einheit (9) gedreht wird, wobei sich die Leitungen (16) innerhalb der Leitungsdurchführung (15) gegenüber der ersten Einheit (9) frei bewegen können.

5. Vorrichtung (5') nach Anspruch 4,
wobei mittels der Leitungs-Führungseinrichtung (17) ein zweiter Bereich (45) der Leitungen (16), der sich an einem der ersten Einheit (9) zugewandten Ende der Leitungsdurchführung (15) oder in der ersten Einheit (9) befindet, bezüglich der Drehachse (D), unabhängig vom ersten Drehwinkel (β), um einen zweiten Drehwinkel (α) drehbar ist, derart, dass eine Differenz zwischen dem ersten Drehwinkel (β) und dem zweiten Drehwinkel (α) dem Ausmaß der Verdrillung der Leitungen (16) innerhalb der Leitungsdurchführung (15) entspricht.

6. Vorrichtung (5') nach Anspruch 5,
wobei der erste Drehwinkel (β) dem zweiten Drehwinkel (α) entspricht.

7. Vorrichtung (5') nach einem der Ansprüche 1 bis 6,
wobei die Leitungsdurchführung (15) an dem der ersten Einheit (9) zugewandten Ende ein entlang der Drehachse (D) verlaufendes erstes rohrförmiges Element aufweist, an dessen der zweiten Einheit (10) abgewandten Ende (25) ein zweites rohrförmiges Element (26) schwenkbar gelagert ist, wobei die Ausrichtung des zweiten rohrförmigen Elements (26) wenigstens eine Komponente aufweist, die senkrecht zur Drehachse (D) verläuft, wobei das zweite rohrförmige Element (26) bezüglich einer Ebene schwenkbar gelagert ist, die senkrecht zur Drehachse (D) verläuft, und wobei die Leitungen (16) durch das erste rohrförmige Element und das zweite rohrförmige Element (26) hindurch verlaufen.

8. Vorrichtung (5') nach Anspruch 7,
wobei das zweite rohrförmige Element (26) bei Drehung der zweiten Einheit (10) gegenüber der ersten Einheit (9) um einen Winkel A ebenfalls um den Winkel A gedreht wird.

9. Vorrichtung (5') nach einem der Ansprüche 1 bis 8,
wobei die Leitungen (16) wenigstens eine der folgenden Leitungen aufweisen: eine Leitung zum Zuführen von Schmierung für die Lager der Motorspindel (6), eine Leitung zum Leiten eines Temperatursignals von Temperatursensoren der Motorspindel, eine Leitung zum Leiten von Sperrluft, eine Leitung zum Leiten von Blasluft, eine Leitung zum Leiten von Kühlschmierstoff, eine Leitung zum Leiten von Kühlwasser für die Motorspindel, eine Leitung zum Leiten von einem Hydraulikfluid für eine Spannvorrichtung, eine Leitung zum Leiten von elektrischem Strom für eine Arbeitsraumleuchte, eine Leitung zum Leiten eine Vibrationssignals von Vibrationssensoren der Motörspindel, eine Leitung zum Leiten eines Drehgebersignals eines Drehgebers der Motorspindel, eine Leitung zum Leiten von elektrischem Strom für einen Antrieb der Motorspindel, und eine Erdungsleitung für die Motorspindel.

10. Werkzeugmaschine (1),
mit einer Vorrichtung (5') nach einem der Ansprüche 1 bis 7.

11. Werkzeugmaschine (9) nach Anspruch 10,
wobei die Vorrichtung (5') auf einem Schlitten (30) montiert ist, der entlang einer Führungsschiene (4) der Werkzeugmaschine (1) bewegbar ist.

## Claims

1. A device (5') for employment in a machine tool (1), including:
- a first unit (9),
- a second unit (10) connected to the first unit (9), wherein the first unit (9) is rotatable around a rotational axis (D) relative to the second unit (10),
- a motor spindle (6) connected to the second unit (10), **characterized in that**
- a line feed-through (15) extending along the rotational axis (D) from the first unit (9) into the second unit (10),
- lines (16) extending from the interior of the first unit (9) through the line feed-through (15) as well as through the second unit (10) into the motor spindle (6), and
- a line guiding device (17) formed in the first unit (9) and serving for guiding a part of the lines (16) disposed in the first unit (9) immediately in front of the line feed-through (17), wherein the line guiding device (15) is formed in a plane oriented perpendicularly to the rotational axis (D), and wherein the line guiding device (17) feeds the lines (16) upon rotation of the second unit (10) with respect to the first unit (9) such that twisting of the lines (16) in the region of the line feed-through (15) caused by the rotation is avoided or reduced.

2. The device (5') according to claim 1,
wherein the line guiding device (17) can be guided back and forth upon rotation of the second unit (10) with respect to the first unit (9) between a first state, in which the line guiding device (17) forms an arcuate segment, and a second state, in which the line guiding device (17) forms a spiral.

3. The device (5') according to any one of the claims 1 to 2,
wherein the line guiding device (17) has a linking of guide elements (23) rotatable relative to each other.

4. The device (5') according to any one of the claims 1 to 3,
wherein a first range (46) of the lines (16) located at an end of the line feed-through (15) facing the second unit (10) or in the second unit (10) is fixedly connected to the second unit (10) such that a first rotation angle (β) of the first range (46) of the lines (16) with respect to the rotational axis (D) corresponds to a rotation angle (β) with respect to the rotational axis (D), by which the second unit (10) is rotated with respect to the first unit (9), wherein the lines (16) can freely move with respect to the first unit (9) within the line feed-through (15).

5. The device (5') according to claim 4,
wherein by means of the line guiding device (17) a second range (45) of the lines (16) located at an end of the line feed-through (15) facing the first unit (9) or in the first unit (9), is rotatable by a second rotation angle (α) with respect to the rotational axis (D) independently of the first rotation angle (β), such that a difference between the first rotation angle (β) and the second rotation angle (α) corresponds to the amount of twisting of the lines (16) within the line feed-through (15).

6. The device (5') according to claim 5,
wherein the first rotation angle (β) corresponds to the second rotation angle (α).

7. The device (5') according to any one of claims 1 to 6,
wherein the line feed-through (15) has a first tubular element extending along the rotational axis (D) at the end facing the first unit (9), at the end (25) of which facing away from the second unit (10) a second tubular element (26) is pivotably supported, wherein the orientation of the second tubular element (26) has at least one component extending perpendicularly to the rotational axis (D), wherein the second tubular element (26) is pivotably supported with respect to a plane extending perpendicularly to the rotational axis (D), and wherein the lines (16) extend through the first tubular element and the second tubular element (26).

8. The device (5') according to claim 7,
wherein the second tubular element (26) upon rotation of the second unit (10) with respect to the first unit (9) by an angle A, is also rotated by the angle A.

9. The device (5') according to any one of the claims 1 to 8,
wherein the lines (16) have at least one of the following lines: a line for supplying lubrication for the bearings of the motor spindle (6), a line for conducting a temperature signal from temperature sensors of the motor spindle, a line for conducting sealing air, a line for conducting blowing air, a line for conducting cooling lubricant, a line for conducting cooling water for the motor spindle, a line for conducting hydraulic fluid for a clamping device, a line for conducting electric current for a working room lamp, a line for conducting a vibration signal from vibration sensors of the motor spindle, a line for conducting a rotary encoder signal of a rotary encoder of the motor spindle, a line for conducting electric current for a drive of the motor spindle and a grounding line for the motor spindle.

10. A machine tool (1),
including a device (5') according to any one of claims 1 to 7.

11. The machine tool (9) according to claim 10,
wherein the device (5') is mounted on a carriage (30), which is movable along a guide rail (4) of the machine tool (1).

## Revendications

1. Dispositif (5') destiné à être employé dans une machine-outil (1), comportant
- une première unité (9),
- une seconde unité (10) reliée à la première unité (9), la première unité (9) pouvant tourner autour d'un axe de rotation (D) par rapport à la seconde unité (10),
- une broche motorisée (6) reliée à la seconde unité (10),
**caractérisé par**
- un passage de conduits/lignes (15) qui s'étend depuis la première unité (9) jusqu'à l'intérieur de la seconde unité (10) en longeant l'axe de rotation (D),
- des conduits/lignes (16) qui s'étendent de l'intérieur de la première unité (9) à travers le passage de conduits/lignes (15) ainsi qu'à travers la seconde unité (10) jusque dans la broche motorisée (6), et
- un système de guidage de conduits/lignes (17) qui est réalisé dans la première unité (9) et qui sert au guidage d'une partie des conduits/lignes (16) qui est agencée dans la première unité (9) directement en avant du passage de conduits/lignes (15), le système de guidage de conduits/lignes (17) étant réalisé dans un plan qui est dirigé perpendiculairement à l'axe de rotation (D), le système de guidage de conduits/lignes (17) faisant suivre les conduits/lignes (16) lors d'une rotation de la seconde unité (10) par rapport à la première unité (9), de telle sorte qu'un torsadage des conduits/lignes (16) causé par la rotation dans la zone du passage de conduits/lignes (15) est évité ou réduit.

2. Dispositif (5') selon la revendication 1,
dans lequel, lors d'une rotation de la seconde unité (10) par rapport à la première unité (9), le système de guidage de conduits/lignes (17) est mobile en va-et-vient entre un premier état dans lequel le système de guidage de conduits/lignes (17) forme un segment arqué, et un second état dans lequel le système de guidage de conduits/lignes (17) forme une spirale.

3. Dispositif (5') selon l'une des revendications 1 à 2,
dans lequel le système de guidage de conduits/lignes (17) présente un enchaînement d'éléments de guidage (23) pouvant tourner les uns par rapport aux autres.

4. Dispositif (5') selon l'une des revendications 1 à 3,
dans lequel une première zone (46) des conduits/lignes (16) qui se trouve à une extrémité du passage de conduits/lignes (15), tournée vers la seconde unité (10), ou dans la seconde unité (10) est solidaire de la seconde unité (10) de telle sorte qu'un premier angle de rotation (β) de la première zone (46) des conduits/lignes (16) par rapport à l'axe de rotation (D) correspond à un angle de rotation (β) par rapport à l'axe de rotation (D), duquel la seconde unité (10) est tournée par rapport à la seconde unité (9), les conduits/lignes (16) pouvant se déplacer librement par rapport à la première unité (9) à l'intérieur du passage de conduits/lignes (15).

5. Dispositif (5') selon la revendication 4,
dans lequel, au moyen du système de guidage de conduits/lignes (17), une seconde zone (45) des conduits/lignes (16) située à une extrémité du passage de conduits/lignes (15), tournée vers la première unité (8), ou dans la première unité (9) est capable de tourner d'un second angle de rotation (α) par rapport à l'axe de rotation (D), indépendamment du premier angle de rotation (β), de telle sorte qu'une différence entre le premier angle de rotation (β) et le second angle de rotation (α) correspond à l'ampleur du torsadage des conduits/lignes (16) à l'intérieur du passage de conduits/lignes (15).

6. Dispositif (5') selon la revendication 5,
dans lequel le premier angle de rotation (β) correspond au second angle de rotation (α).

7. Dispositif (5') selon l'une des revendications 1 à 6,
dans lequel, à l'extrémité tournée vers la première unité (9), le passage de conduits/lignes (15) comprend un premier élément tubulaire qui s'étend le long de l'axe de rotation (D), dont l'extrémité (25) détournée de la seconde unité (10) présente un second élément tubulaire (26) qui y est monté avec faculté de pivotement, l'orientation du second élément tubulaire (26) présentant au moins une composante perpendiculaire à l'axe de rotation (D), le second élément tubulaire (26) étant monté avec faculté de pivotement par rapport à un plan perpendiculaire à l'axe de rotation (D), les conduits/lignes (16) traversant le premier élément tubulaire et le second élément tubulaire (26).

8. Dispositif (5') selon la revendication 7,
dans lequel, lors d'une rotation de la seconde unité (10) d'un angle A par rapport à la première unité (9), le second élément tubulaire (26) est également tourné de l'angle A.

9. Dispositif (5') selon l'une des revendications 1 à 8,
dans lequel les conduits/lignes (16) comprennent l'un/l'une au moins des conduits/lignes suivant(e)s : un conduit d'alimentation de lubrification pour les paliers de la broche motorisée (6), une ligne de transmission d'un signal de température des capteurs de température de la broche motorisée, un conduit d'alimentation d'air de barrage, un conduit d'alimentation d'air de soufflage, un conduit d'alimentation de lubrifiant de réfrigération, un conduit d'alimentation d'eau de refroidissement pour la broche motorisée, un conduit d'alimentation de fluide hydraulique pour un dispositif de serrage, une ligne d'alimentation de courant électrique pour une lampe de travail, une ligne d'alimentation d'un signal de vibration des capteurs de vibration de la broche motorisée, une ligne de transmission d'un signal d'un codeur rotatif de la broche motorisée, une ligne d'alimentation de courant électrique pour un entraînement de la broche motorisée et une ligne de mise à la terre pour la broche motorisée.

10. Machine-outil (1),
comportant un dispositif (5') selon l'une des revendications 1 à 7.

11. Machine-outil (9) selon la revendication 10,
dans laquelle le dispositif (5') est monté sur un chariot (30) qui est mobile le long d'un rail de guidage (4) de la machine-outil (1).
